# EUROPEAN PATENT APPLICATION

(11) **EP 1 955 831 A2**
(43) Date of publication of application: **13.08.2008**
(21) Application number: 08001723.9
(22) Date of filing: 30.01.2008
(51) Int. Cl.: B25J 9/16

(54) **Robot control unit for stopping a movement of a robot according to a force detection value detected by a force sensor**

(30) Priority: 06.02.2007 JP 2007026773
(71) Applicant: FANUC LTD, Minamitsuru-gun, Yamanashi 401-0597 (JP)
(72) Inventor: Sakano, Tetsuro, Minamitsuru-gun Yamanashi 401-0597 (JP)
(74) Representative: Thum, Bernhard

(57) **Abstract**

A robot control unit (10) having a designated speed adjusting means for adjusting a designated speed, which is contained in a robot command program, to a value not more than the designated speed, comprises: a decoding means (38) for decoding a movement stopping command of stopping a movement of the robot (1) according to a force detection value detected by a force sensor (2) attached to a wrist of the robot (1); a movement command means (36) for generating a movement command of moving the robot by the designated speed in the designated direction contained in the program without activating the designated speed adjusting means; a force calculation means (31) for calculating a change in a force detection value from a reference value as a present force value; and a comparison means (32) for comparing a present force value, which is repeatedly calculated at a predetermined period by the force calculation means, with a predetermined force designated value while the robot is moving. When the present force value is not less than the designated force value, the movement command means stops the robot. Due to the foregoing, a force applied from the outside to the robot can be highly sensitively detected and the robot can be highly accurately stopped.

## Description

### BACKGROUND OF THE INVENTION

### 1. Field of the Invention

The present invention relates to a robot control unit for controlling a robot such as an industrial robot. More specifically, the present invention relates to a robot control unit for stopping a movement of a robot according to a force detection value detected by a force sensor attached to a wrist of the robot.

### 2. Description of the Related Art

Generally, when it is detected that a hand of a robot comes into contact with another object at the time of moving and receives a force from the object, a movement of the robot is stopped. For example, Japanese Unexamined Patent Publication No. 7-24665 discloses that a robot is stopped in the case where a detection value detected by a force sensor attached to a wrist of an orthogonal-type robot is raised to a threshold value or more.

Japanese Unexamined Patent Publication No. 3-49886 discloses that in a robot to which a force sensor is attached, force control is executed by feedback control of force sensor detection information. Force feedback is stopped by a movement command. When the output of the force sensor exceeds a threshold value, it is determined that contact has been made and a movement of the robot is stopped.

Further, Japanese Unexamined Patent Publication No. 8-39467 discloses the following method. A detection value of a force sensor attached to a wrist is reset. When a detection value detected after that is compared with a reference value, it is judged that an end effector has come into contact with a workpiece. In the case where the end effector has come into contact with the workpiece, the robot is stopped and a coordinate value is read out.

Furthermore, Japanese Unexamined Patent Publication No. 8-241107 discloses the following method. A relationship between a force sensor detection value and an allowable reference value is evaluated by a robot to which a force sensor is attached. In the case where the force sensor detection value exceeds the allowable reference value, it is judged that a collision has occurred and a movement of the robot is immediately stopped.

Generally, in the case where a robot is assembling a workpiece, it is desirable that the workpiece grabbed by a hand of an articulated robot is arranged at a free posture and a movement of the robot is stopped when a state of contact is detected by using a force sensor.

However, in the force control technique in which a force sensor is used, the essential constitution is that feedback control is executed according to a force detection value. In this case, a feedback loop includes: a grabbing mechanism attached to an end portion of the robot hand; a rigidity of an object grabbed by the grabbing mechanism; and a state of contact between the grabbing mechanism and the object. Accordingly, these greatly affect the stability and response characteristics of the feedback control system.

Therefore, it is necessary to adjust a characteristic parameter, for example a gain of the feedback control system according to the grabbing mechanism attached to the end portion of the robot hand, the rigidity of an object grabbed by the grabbing mechanism and the state of contact between the grabbing mechanism and the object, and is therefore difficult to use the robot. When the feedback control is executed, vibration and overshoot tend to occur. Therefore, it is impossible to set a high value on the gain. As a result, the response speed is reduced.

In the method disclosed in Japanese Unexamined Patent Publication No. 7-24665, when a direction of the gravity axis of the wrist is changed by changing a posture of the wrist, a direction of a force given by the hand and a workpiece is changed. Corresponding to the above change of the force, a force detection value from the force sensor is changed. Since it is impossible to discriminate between this change of the force detection value and the change of the force detection value caused by a force given to the hand from the outside force, when the control method, in which an articulated type robot is used, is applied to a vertical articulated type robot, the force detection value is changed by a change in the posture of the wrist and the robot is erroneously operated. The same problem occurs in the case of the technique disclosed in Japanese Unexamined Patent Publication No. 3-49886.

In the method disclosed in Japanese Unexamined Patent Publication No. 8-39867, although a robot is stopped in the case where contact has been made, actually, the robot cannot be instantaneously stopped. Usually, the robot idly runs at a distance corresponding to a moving speed of the robot. In the case where a teaching and trial run of the industrial robot are executed so as to ensure safety, an override setting operation is made from an operation panel of a robot control unit so that a moving speed designated by a program can be lowered. Therefore, in the case of executing the teaching and trial run in the method disclosed in Japanese Unexamined Patent Publication No. 8-39467, the robot is operated under the condition that the moving speed designated by the program is lowered. Accordingly, a problem is encountered in which a contact stopping position is changed according to a change of the moving speed.

In the method disclosed in Japanese Unexamined Patent Publication No. 8-241107, a force detection value is always monitored at the time of moving of the robot so that the force detection value can be used for detecting a collision. However, this force detection value is affected by an inertial force and a centrifugal force generated when the robot is moved. Further, this force detection value is also affected by a change in a force component caused by a change in the gravity axis which is generated by a change in a posture of a wrist. Therefore, in the case where an allowable reference is set at a relatively low value, the robot is erroneously operated.

In this connection, there is proposed a technique in which an addition caused by disturbance is detected by a servo motor for driving a robot joint and when a collision or an overload is detected, a movement of the robot is urgently stopped. Further, there is proposed a technique in which a movement of the robot is urgently stopped according to a signal sent from a touch sensor attached to a hand of the robot.

However, since a load applied to the joint portion of the robot is utilized in a technique in which the servo motor is used. The detection sensitivity is low. Further, in the technique in which a touch sensor is utilized, the touch sensor interferes with a workpiece. Furthermore, it is impossible to detect a force applied to the hand of the robot.

The present invention has been accomplished in view of the above circumstances. An object of the present invention is to provide a robot control unit capable of highly sensitively detecting a force applied from the outside to a hand of the robot or a workpiece grabbed by the hand of the robot and also capable of highly accurately stopping the robot.

### SUMMARY OF THE INVENTION

In order to accomplish the above object, the first aspect provides a robot control unit having a designated speed adjusting means for adjusting a designated speed, which is contained in a robot command program, to a value not more than the designated speed, comprising: a decoding means for decoding a movement stopping command of stopping a movement of the robot according to a force detection value detected by a force sensor attached to a wrist of the robot; a movement command means for generating a command of moving the robot by the designated speed contained in the program in the designated direction contained in the program without activating the designated speed adjusting means in the case where the movement stopping command is decoded by the decoding means; a force calculation means for calculating a change in a force detection value from a reference value as a present force value when a force detection value of the force sensor at the time of starting a movement of the robot is used as the reference value; and a comparison means for comparing the present force value, which is repeatedly calculated at a predetermined period by the force calculation means, with a predetermined designated force value while the robot is moving, wherein when the comparison means judges that the present force value is not less than the designated force value, the movement command means stops the robot, the robot control unit further comprising a stopping position reading means for reading a stopping position of the robot.

Usually, in the case where a movement command is stopped by a force detection, the robot stops while it is going past by an amount of follow-up delay of the servo control system. Since the amount of follow-up delay of the servo control system is approximately proportional to a moving speed, when the moving speed is changed, an amount of going past is changed and a stopping position is changed. However, in the first aspect, when a movement stopping command of stopping a movement of the robot is carried out according to the force detection value of the force sensor, a designated speed after the adjustment, which was adjusted by the designated speed adjustment means is not used, but a designated speed before the adjustment is used. Therefore, the moving speed becomes constant and it is possible to prevent the stopping position from changing. Therefore, even in the case where the designated speed is adjusted for confirming a robot operation at the time of trial run, etc. of the robot, the robot stopping position decided by the force detection is not affected and the repetition accuracy of the stopping position can be enhanced. In this connection, when the moving speed is made constant, there is a possibility that the safety is deteriorated at the time of trial run, etc. However, the designated speed used for this movement stopping command is very low. Therefore, no problems are caused regarding safety.

According to the second aspect, as in the first aspect, a robot control unit further comprises a changeover means for changing over whether the latest force detection value of the force sensor at the time of starting of a movement of the robot is employed as the reference value or the reference value, which was set before, is continuously used without being changed.

The second aspect is advantageously used in the case where the reference value is not renewed at the time of starting a movement, but the reference value employed before is used as it is.

According to the third aspect, as in the first or the second aspect, when an amount of movement of the robot reaches an amount of the predetermined limitation of movement without an increase in the present force value to a value not less than the designated force value, the robot is stopped and a predetermined processing with respect to the amount of movement of the robot is carried out.

The third aspect is advantageously used in the case where the robot hand does not come into contact with an estimated object. Therefore, a predetermined processing with respect to an amount of movement of the robot in the third aspect is a processing which is previously set so that it can be executed in the case where the robot is not contacted with an object.

The fourth aspect provides a robot control unit having a designated speed adjusting means for adjusting a designated speed, which is contained in a robot command program, to a value not more than the designated speed, comprising: a decoding means for decoding a movement command having a force limitation of stopping a movement of the robot according to a force detection value detected by a force sensor attached to a wrist of the robot; a movement command means for generating a command of moving the robot by the designated speed contained in the program to a designated position contained in the program in the case of decoding the movement command having the force limitation by the decoding means without activating the designated speed adjusting means; a force calculation means for calculating a change in a force detection value from a reference value as a present force value when a force detection value of the force sensor at the time of starting a movement of the robot is used as the reference value; and a comparison means for comparing the present force value, which is repeatedly calculated at a predetermined period by the force calculation means, with a predetermined designated force value while the robot is moving, wherein when the comparison means judges that the present force value is not less than the designated force value, the movement command means stops the robot and a predetermined processing is executed for the robot, and when the robot reaches the designated position while the present force value is being maintained at a value not more than the designated force value, the movement command means stops the robot and the original processing of the robot in the program is continued.

In the fourth aspect, the designated speed after adjustment, which has been adjusted by the designated speed adjusting means, is not used but the designated speed before adjustment is used. Therefore, the moving speed is maintained constant and the stopping position can be prevented from changing. Therefore, even when the designated speed is adjusted for confirming a robot operation at the time of a trial run, etc. of the robot, the robot stopping position decided by a force detection is not affected. Accordingly, it is possible to enhance the repetition accuracy of the stopping position. Further, in the fourth aspect, since the robot is moved toward the designated position, the fourth aspect is advantageous when the robot comes into contact with an obstacle in the middle of the movement. In this connection, the predetermined processing in the fourth aspect is a program to cope with a case, for example, in which the robot comes into the obstacle.

According to the fifth aspect, as in the first or the fourth aspect, when the robot is stopped as a result of the judgment by the comparison means that the present force value is not less than the designated force value, the robot stopping position is compared with a predetermined allowable range and when the robot stopping position is out of the predetermined allowable range, a predetermined processing with respect to the allowable range is executed.

In the fifth aspect, when it is judged whether or not the robot stopping position is out of the allowable range, it is possible to judge whether or not an operation carried out by the robot has been normally completed. In this connection, the predetermined processing in the allowable range in the fifth aspect is, for example, a program for retry.

An object, characteristic and advantage of the present invention and another object, characteristic and advantage of the present invention will become more clear from the detailed explanation of the typical embodiment of the present invention shown in the accompanying drawings.

### BRIEF DESCRIPTION OF THE DRAWINGS

Fig. 1 is an overall arrangement view showing a robot control unit and a robot according to the present invention.
Fig. 2 is a functional block diagram of the robot control unit according to the present invention.
Fig. 3 is a flow chart showing an action at the time of giving a movement stopping command of a robot control unit according to the first embodiment of the present invention.
Fig. 4 is a flow chart showing an action at the time of giving a movement stopping command of a robot control unit according to the second embodiment of the present invention.
Fig. 5 is a flow chart showing an action at the time of giving a movement stopping command of a robot control unit according to the third embodiment of the present invention.
Fig. 6 is a flow chart showing an action at the time of giving a movement command having a force limitation of a robot control unit according to the fourth embodiment of the present invention.
Fig. 7 is a flow chart showing an action at the time of giving a movement stopping command of a robot control unit according to the fifth embodiment of the present invention.
Fig. 8 is a flow chart showing an action at the time of giving a movement command in the normal case.

### DETAILED DESCRIPTION

An embodiment of the present invention will be explained below by referring to the accompanying drawings. Like reference characters are used to indicate like components in the following drawings. In order to facilitate understanding, the scales in the drawings have been appropriately changed.

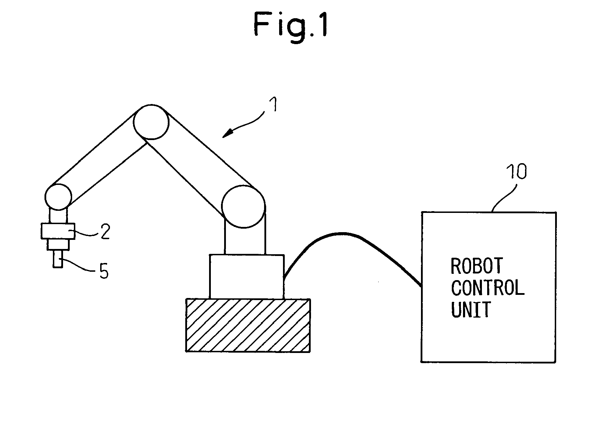

Fig. 1 is an overall arrangement view showing a robot control unit and a robot according to the present invention. An articulated type robot 1 is shown in Fig. 1. As shown in Fig. 1, the 6-axis force sensor 2 is attached to a wrist of the robot 1 and the hand 5 for grabbing a workpiece is attached to a forward end side of the force sensor 2.

A posture of the wrist of the articulated type robot 1 shown in Fig. 1 can be freely changed. Therefore, a workpiece grabbed by the hand 5 can be arranged in a desired direction. The 6-axis force sensor 2 can detect forces of the 3 orthogonal axes (X, Y, Z) at the wrist of the robot 1 and moment (Mₓ, M_{y}, M_{z}) round each axis. The detection sensitivity of the force sensor 2 is relatively high. For example, the minimum detection value of the force sensor 2 is not more than 10 gf. The force sensor 2 can detect even a weak force in every direction given to the forward end portion of the usual hand 5 having a grabbing mechanism or given to a workpiece (not shown) grabbed by the hand 5. In this connection, in the present invention, it is unnecessary to attach an additional mechanism such as a touch sensor to the forward end portion of the hand 5.

As shown in Fig. 1, the robot 1 is connected to the robot control unit 10. Therefore, the force sensor 2 is also connected to the robot control unit 10 through the robot 1.

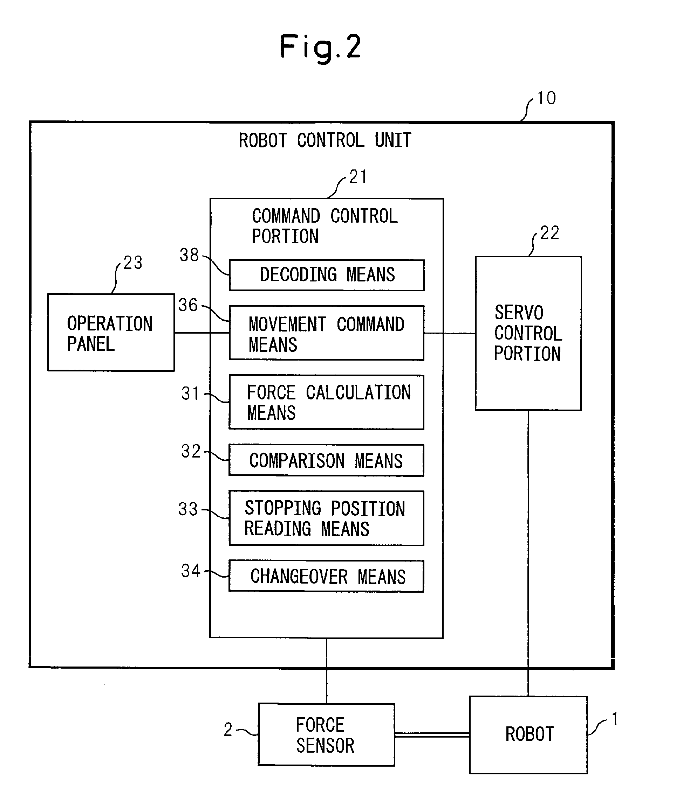

Fig. 2 is a functional block diagram according to the robot control unit of the present invention. As shown in Fig. 2, the robot control unit 10 mainly includes: a command control portion 21; a servo control portion 22; and an operation panel 23. Although not shown in the drawing, the robot control unit 10 includes a storage portion (not shown) for storing a robot command program, a result of calculation and each threshold value. In this connection, the robot command program includes a statement for designating an action of the robot 1. The statement for designating the action of the robot 1 includes a designated position and a designated speed of the robot 1.

The command control portion 21 of the robot control unit 10 decodes a robot command program stored in the storage portion and carries out various processing corresponding to the program command and outputs a movement command of the robot 1 to the servo control portion 22.

As shown in Fig. 2, the command control portion 21 includes: a decoding means 38; a movement command means 36; a force calculating means 31; a comparison means 32; a stopping position reading means 33; and a changeover means 34. The decoding means 38 decodes a robot command program and discriminates for what the command is. The movement command means 36 calculates a movement passage of the robot 1 corresponding to the command decoded by the decoding means 38, distributes and renews the movement command of the robot for each control period along the movement passage, converts it into a movement command of each joint of the robot and outputs it to the servo control portion. The movement command means 36 reads out an override value from the operation panel 23, adjusts a movement speed of the robot 1 and stops the movement command according to the result of the judgment made by the comparison means 32. The force calculation means 31 reads out a signal sent from the force sensor 2, calculates a force detection value PD which is converted into a coordinate system suitable for the work and further calculates a present force value PC by subtracting the reference value PS from the force detection value PD.

The comparison means 32 of the command control portion 21 compares the present force value PC, which has been calculated by the force calculation means 31, with a predetermined designated force value P0, which is stored in the storage portion, and outputs a result of the judgment. The stopping position reading means 33 of the command control portion 21 reads out and stores a stopping position when the movement command means 36 stops a movement command according to the result of the judgment made by the comparison means 32.

The changeover means 34 of the command control portion 21 is used for changing over between the replacement of the reference value PS with the latest force detection value PD and the use of the conventional reference value PS.

The servo control portion 22 executes servo-controlling of a motor for driving each joint of the robot 1 so that the motor can follow a movement command sent from the command control portion 21. Therefore, the motor can follow the movement command being delayed by a delay time substantially proportional to the moving speed.

The operation panel 23 controls a start of execution of the robot command program of the robot 1 and a temporary interruption. In addition to that, the operation panel 23 can adjust a movement speed of the robot 1. Specifically, the operation panel 23 can select an override value OR in the range from 0% to 100%. According to the selected override value OR, the command control portion 21 makes an adjustment so that a movement speed of the robot 1 can be reduced with respect to the designated speed which has been designated by the robot command program as described later.

The reduction of the movement speed of the robot 1, in which the override value OR is used, is made for confirming the safety at the time of a trial run of the robot 1. That is, in the case where a new robot command program is made, in order to prevent a collision or in order to accurately confirm an action of the robot 1, the robot 1 is operated while the movement speed of the robot 1 is being reduced to, for example, 20%. After the safety has been confirmed, the movement speed of the robot 1 is returned to an actual movement speed. This override function can reduce a movement speed of the robot 1 without changing the robot command program. Therefore, the override function is indispensable to the robot control unit. Accordingly, in general, this override function is activated for a statement to designate a robot movement.

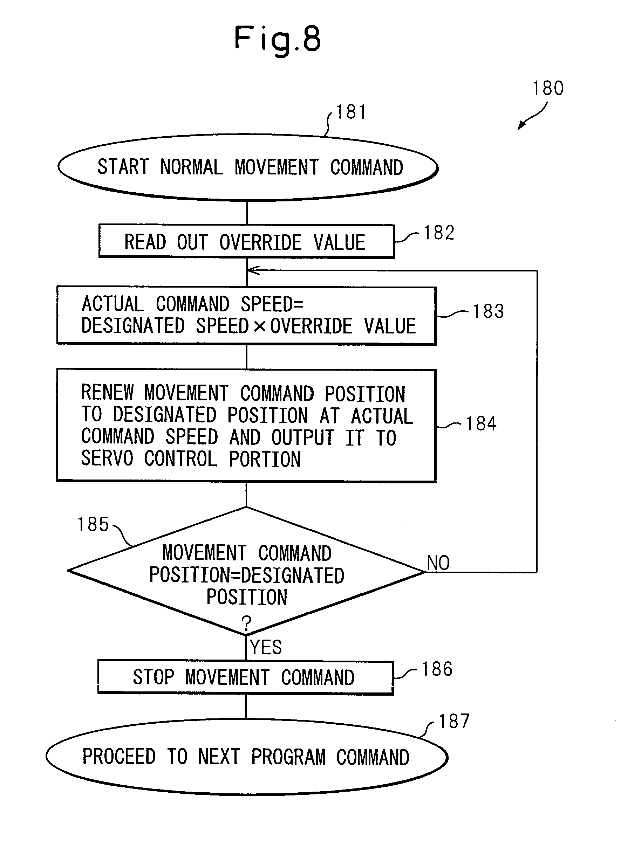

First, referring to Fig. 8, an action of the robot control unit in the case of giving a usual movement command will be explained below. The flow chart 180 shown in Fig. 8 is executed in the case where the command control portion 21 decodes a robot command program and finds that a movement command is in the robot command program.

When a usual movement command is started in step 181, the command control portion 21 reads out an override value OR on the operation panel 23 for each predetermined control period in step 182. Next, in step 183, the designated speed stored in the robot command program is multiplied by the override value OR so as to calculate the actual command speed. In step 184, the movement command position is renewed by the actual command speed for each predetermined control period toward the designated position stored in the robot command program and the thus renewed movement command position is outputted to the servo control portion 22.

Then, as can be seen from steps 185 and 186, until the movement command position reaches the designated position, processing is repeated for each predetermined control period. In the case where the movement command position has reached the designated position, the movement command is stopped and the processing is completed. In this case, as shown in step 187, the program proceeds to the next original program command. The robot control unit 10 is usually operated as described above. In the present invention, at the time of giving the movement command, the actual command speed is set according to the override value OR.

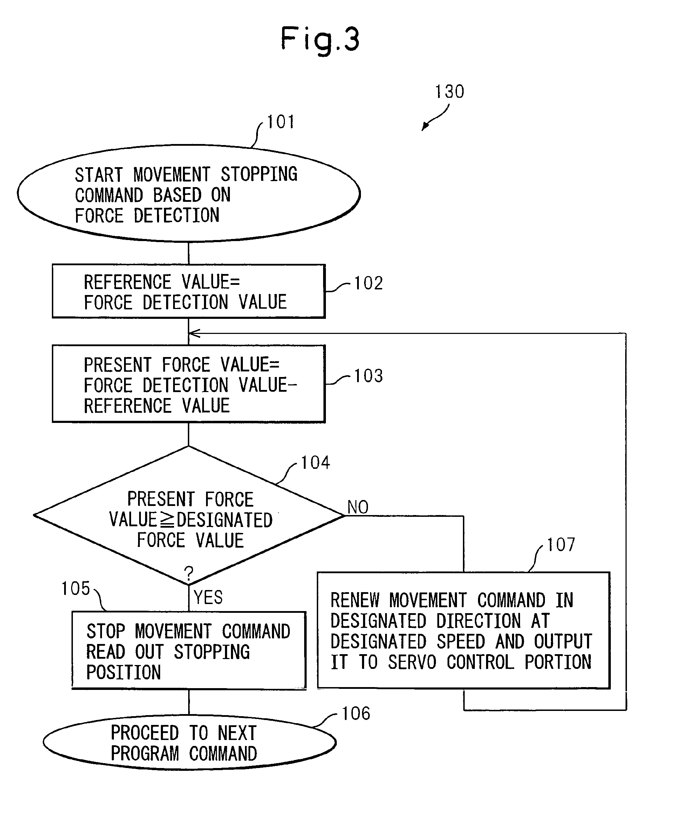

Fig. 3 is a flow chart showing an action at the time of giving a movement stopping command according to a robot control unit of the first embodiment of the present invention. In the present invention, in the case where the statement of the robot command program decoded by the command control portion 21 is a movement stopping command, the flow chart 130 shown in Fig. 3 is carried out by the robot control unit 10.

When the movement stopping command given by a force detection is started in step 101 of the flow chart 130, the changeover means 34 sets the latest force detection value PD, which has been detected by the force sensor 2, as a reference value PS (step 102). Therefore, in the present invention, even when the wrist of the robot 1 takes any posture at the time of starting a movement, a change in the force after that can be detected while the posture of the wrist at the time of starting the movement is being used as a reference.

In the case where the hand 5 does not come into contact with a stationary portion (not shown) such as a working table, the force detection value PD of the force sensor 2 at the time of starting a movement is composed of a sum. In this case, the sum includes: a force component caused by the gravity of the hand 5 and a workpiece (not shown) grabbed by the hand 5; an offset error component, which is a detection error that does not become zero at the time of no load, of the force sensor 2; and a drift error component caused by a change in the temperature, etc. In the present invention, since the force detection value PD is set as a reference value PS, concerning the present force value PC, all the components described above are canceled. Accordingly, unless the posture of the hand 5 is greatly changed at the time of moving, force components caused by the gravity are seldom changed. Further, in the case where the movement speed is set at a low value, an inertial force generated is relatively low. Therefore, in the present invention, a force given to the hand 5 after the start of a movement can be detected with a high sensitivity.

Next, in step 103 of the flow chart 130, the force calculating means 31 subtracts the reference value PS from the force detection value PD by the force sensor for each predetermined control period, for example, for each 8 ms so as to calculate the present force value PC. It is preferable that the period of calculating the present force value PC is synchronized with the distribution period of the movement command of the robot. Due to the foregoing, the following work can be accurately executed.

Then, in step 104, the comparison means 32 compares the present force value PC with the designated force value P0. The designated force value P0 is previously determined and stored in the storage portion. In the case where the present force value PC is lower than the designated force value P0, the movement command is renewed in the designated direction at the designated speed before the override setting and outputted to the servo control portion 22 (step 107) to return to step 103. On the contrary, in the case where the present force value PC is not less than the designated force value P0, the movement command is stopped and a stopping position is read out by the stopping position reading means 37 and set in a register (step 105). Then, the program proceeds to the next program command (step 106).

Usually, in the case where the movement command is stopped by the force detection, the robot is stopped after it has gone past by an amount of follow-up delay of the servo control system. Since the amount of follow-up delay of the servo control system is substantially proportional to the moving speed, when the moving speed is changed, the amount of going past is also changed. Accordingly, the stopping position may be changed.

However, in the present invention, while the movement stopping command given by the force detection is being carried out, the setting of override with respect to the moving speed is neglected and the robot is always moved at a designated speed, for example, at 10 mm/sec. That is, in the present invention, when the movement command is stopped (step 105), the designated speed before the setting of override is used. Accordingly, the moving speed is maintained constant. Therefore, it is possible to prevent the stopping position from being changed. In other words, in the present invention, even in the case where the override value OR is set for confirming an action of the robot 1 in a trial run, etc. of the robot 1, the stopping position of the robot determined by the force detection is not affected, so that the repetition accuracy of the stopping position can be enhanced.

As can be seen from Fig. 3, no feedback control is executed with respect to the force detection value PD in the present invention. Accordingly, there is no possibility that the control system becomes unstable. Therefore, a delay of response, which frequently occurs in a force feedback system, is not caused, in the present invention.

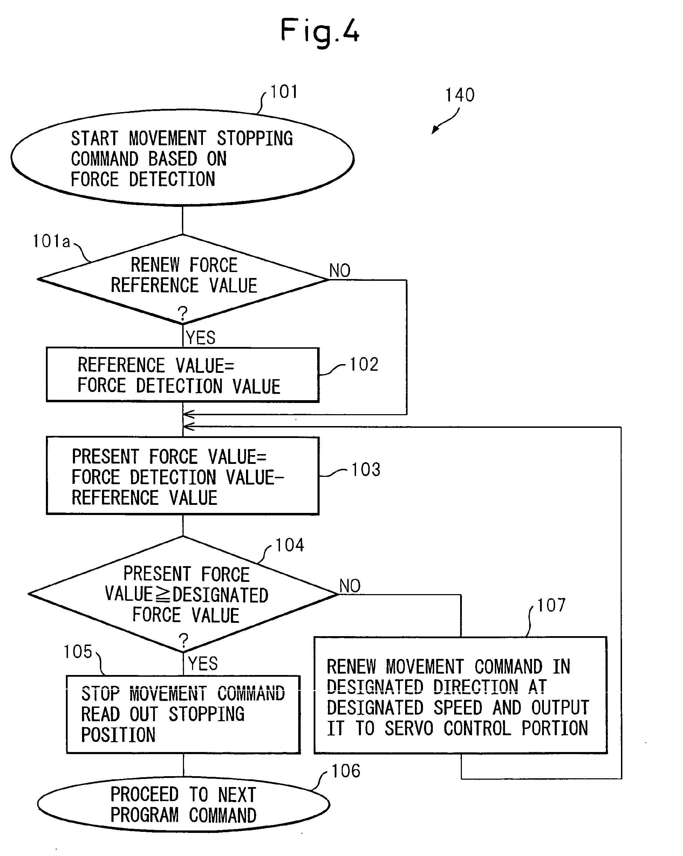

Fig. 4 is a flow chart showing an action at the time of giving a movement stopping command of a robot control unit according to the second embodiment of the present invention. Steps explained before, the reference numerals of which are the same, shown in the flow charts of Fig. 4 and Figs. 5 to 7 described later are not explained here for the purpose of simplifying the descriptions of the specification.

In the flow chart 140 shown in Fig. 4, after the start of the movement stopping command (step 101), it is judged whether or not there is a designation of renewing the reference value PS in the movement stopping command given by the force detection. If the designation described before exists, the latest force detection value PD is set as a reference value PS by the changeover means 34. On the other hand, in the case where the designation does not exist, the reference value PS, which has been conventionally set, is used as it is and the program is returned to step 103.

The processing shown in Fig. 4 is executed, for example, in a push button operation test. Specifically, the processing of the push button operation test is executed as follows. By the first command of the push button operation test, the reference value PS is renewed at the time of the start of movement and the designated force value P0 is set at a relatively low value. Then, it is detected that the hand 5 of the robot 1 has come into contact with a surface of the push button and the movement command is stopped. In the next command, the designated force value P0 is set at a relatively high value without renewing the reference value PS. When it is detected that the push button has reached an end thereof, the movement command is stopped. By checking the stopping position, at which the designated force value P0 is relatively high, and the stopping position, at which the designated force value P0 is relatively low, it is possible to judge whether or not the push button switch is normally operated. The changeover (renewal) of the reference value PS made by the changeover means 34 is especially advantageous in the case of confirming the push button switch operation.

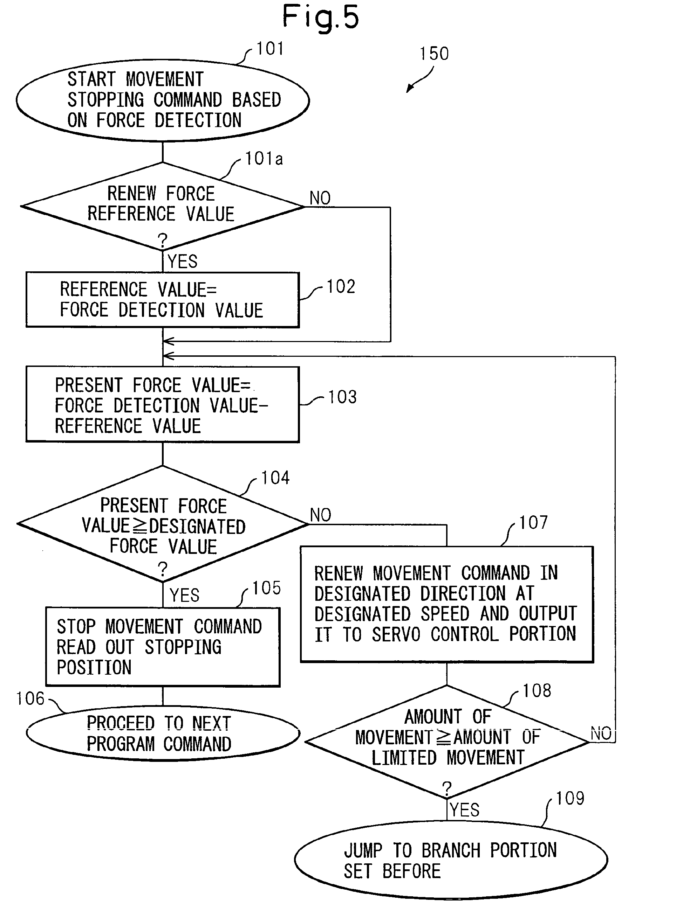

Fig. 5 is a flow chart showing an action at the time of giving a movement stopping command of a robot control unit according to the third embodiment of the present invention. The flow chart 150 shown in Fig. 5 is executed, for example, when the hand 5 of the robot 1 does not come into contact with an estimated object.

Specifically, operation is executed as follows. When the robot is moved in a designated direction at a designated speed in step 107 of the flow chart 150, an amount of movement L of the robot 1 is stored. Next, in step 108, the amount of movement L is compared with a predetermined limited amount of movement L0. In this connection, the predetermined limited amount of movement L0 is previously stored in the storage portion of the robot control unit 10.

In the case where the amount of movement L is not larger than the predetermined limited amount of movement L0, the program is returned to step 103 and the processing is repeated. On the other hand, in the case where the amount of movement L is not less than the predetermined limited amount of movement L0, in other words, in the case where it is judged in step 104 that the present force value PC is lower than the designated force value P0 (step 104) and the amount of movement L is not less than the predetermined limited amount of movement L0, the movement is stopped and the program is jumped to a branch portion which has been previously set and the predetermined processing is executed (step 109). The predetermined processing in this case is the processing which has been previously set to be executed in the case where the robot does not come into contact with an object.

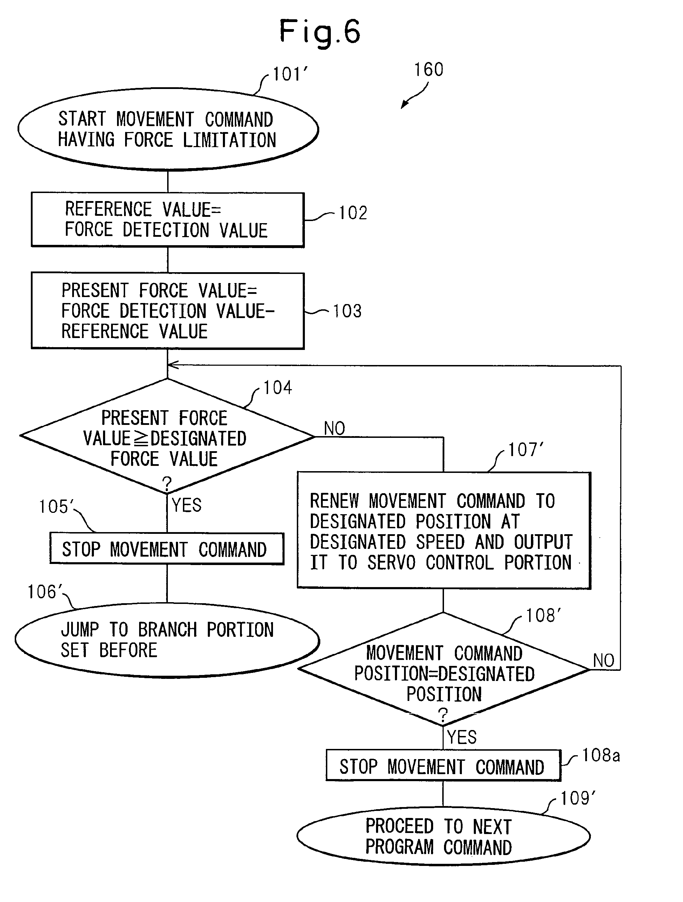

Fig. 6 is a flow chart showing an action at the time of giving a movement command having a force limitation of a robot control unit according to the fourth embodiment of the present invention. The embodiment shown in Fig. 6 is carried out in the case where a movement command having a force limitation in the robot command program, which has been decoded by the command control portion 21, is executed.

After the movement command having a force limitation has been started in step 101' of the flow chart 160 shown in Fig. 6, steps 102 to 104 are executed as described before. However, in the case where the present force value PC is not less than the designated force value P0 in step 104, the movement command is stopped and the execution of the program is jumped to a predetermined branch portion (steps 105' and 106').

On the other hand, in the case where the present force value PC is lower than the designated force value P0 in step 104, the movement command, which has been renewed toward the designated position at the designated speed, is outputted to the servo control portion (step 107'). In this case, the designated speed before the setting of override is used. Then, it is judged in step 108' whether or not the movement command position has reached the designated position.

As shown in the drawing, in the case where the movement command position has not reached the designated position, the program is returned to step 103 and the processing is repeated. On the other hand, in the case where the movement command position has reached the designated position, the movement is stopped and the program is made to proceed to the next original program command (steps 108a and 109'). In the present invention, until the movement of the robot is stopped in step 108a, the setting of override with respect to the moving speed is neglected and the robot 1 is moved at the designated speed before the setting of override.

Step 107' shown in Fig. 6 is different from step 107 shown in Fig. 3. That is, in step 107' shown in Fig. 6, the robot 1 is moved not to the designated direction but to the designated position. The method shown in Fig. 6 is used for the case in which the robot 1 comes into contact with an obstacle in the middle of moving. Accordingly, it is possible to prevent the hand 5 or the workpiece from being damaged. Further, when it is detected that the robot 1 comes into contact with an obstacle, the program is jumped to another program which copes with the contact with the obstacle (step 106').

In the embodiment shown in Fig. 6, the moving direction is not designated but the position to which the robot is moved (the designated position) is designated (step 107'). Therefore, in the present embodiment, the robot 1 can be moved to a more arbitrary position. In this connection, even in this case, when the movement command is stopped by a contact, the robot 1 is stopped going past by an amount of follow-up delay of the servo control system. This amount of follow-up delay is proportional to the moving speed. Accordingly, in order to reduce fluctuation of the stopping position caused at the time of contact, the designated speed before the setting of override is used for the moving speed of the robot 1.

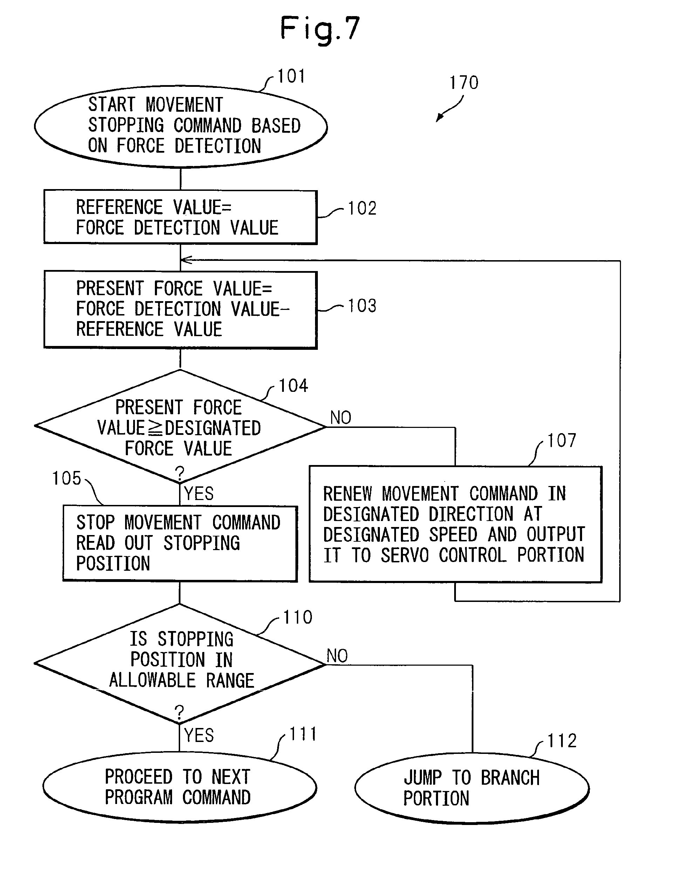

Fig. 7 is a flow chart showing an action at the time of giving a movement stopping command of a robot control unit according to the fifth embodiment of the present invention. When the movement command is stopped in step 105 of the flow chart 170 shown in Fig. 7, it is judged whether or not the stopping position, which has been read out by the stopping position reading means 37, is in a predetermined allowable range (step 110).

In the case where the stopping position is in the predetermined allowable range, the program proceeds to the next program command (step 111). On the other hand, in the case where the stopping position deviates from the predetermined allowable range, the program proceeds to step 112 and jumps to a predetermined branch portion.

As described above, in the case of the flow chart 170 shown in Fig. 7, by judging whether or not the stopping position is in the predetermined allowable range, it is possible to judge whether or not the work, which is being carried out, has been normally completed. This judgment is advantageously used in the case where, for example, the robot 1 inserts a connector plug (male) into a connector socket (female). That is, a stopping position of the robot 1 in the case where the connector plug is stopped at the entrance or in the middle of the connector socket is different from a stopping position of the robot 1 in the case where the connector plug is inserted into the final position of the connector socket. Accordingly, whether or not the connector plug has been properly inserted into the connector socket can be judged through the stopping position. In the case of a failure of inserting the connector plug, the program jumps to a predetermined branch portion and a program for processing an error may be carried out (step 112).

In the embodiment shown in Fig. 7, in the case where the designated force value P0 is set at a very low value, it is possible to detect a position at which a forward end portion of the hand 5 or a workpiece (not shown) grabbed by the hand 5 comes into contact with an object to be fixed (not shown). In the case where the designated force value P0 is set at a considerably high value, the robot 1 pushes the object to be fixed by a relatively strong force and stops. Therefore, the robot 1 can be also used for pushing a component. Further, in this case, a force for pushing the object can be restricted. Therefore, for example, even in the case of a failure of inserting the connector plug, it is possible to prevent the hand 5 or the workpiece from being damaged.

Further, in the case where the movement command of the robot is stopped when it is detected that the present force value PC is raised to a value not less than the designated force value P0 (steps 104 and 105), the robot 1 is stopped going past by an amount of follow-up delay of the servo control system. In the arm or the hand 5 of the robot 1, deflection, which is proportional to the amount of going past, is generated. Therefore, in a state of stoppage, the robot 1 generates a force given to the object which is stronger than the designated force value P0. Accordingly, after the present force value PC has been raised to a value not less than the designated force value P0 and the movement command has been stopped, a movement command of moving by an appropriate amount in the opposite direction is immediately carried out. Then, this force can be quickly reduced. It is desirable to designate on the program whether or not the movement command in the opposite direction is executed and it is also desirable to designate on the program an amount of movement in the opposite direction.

In this connection, in the above embodiment explained by referring to the drawings, the present force value PC normally includes force components of three orthogonal axes of X, Y and Z and three components of moment round the three axes, i.e., the present force value PC normally includes 6 components in total. However, the present force value PC may include only the three axes force components. Alternatively, the present force value PC may include only a force component in the movement direction of the robot. Alternatively, the present force value PC may include only three moment components round the three axes. It is desirable that each axis component of the present force value PC is converted into a working coordinate system. Due to the foregoing, various judging operations can be quickly executed.

In the above explanations, the designated force value and the amount of the limited movement are previously set in the storage portion. However, it is desirable that these values can be designated by the robot command program. Due to the foregoing, it is easy to cope with various actions, the conditions of which are different from each other.

It is desirable that the designated force value can be designated by either the force component or the moment component. In the case where it is designated by the force component, it is compared with the three orthogonal axes components of the present force value PC. In the case where it is designated by the moment component, it is compared with the three moment components round the axes of the present force value PC.

The present invention has been explained above referring to the typical embodiment. However, it should be noted that variations, omissions and additions can be made by those skilled in the art without departing from the scope the present invention.

## Claims

1. A robot control unit (10) having a designated speed adjusting means for adjusting a designated speed, which is contained in a robot command program, to a value not more than the designated speed, comprising:
a decoding means (38) for decoding a movement stopping command of stopping a movement of the robot (1) according to a force detection value detected by a force sensor (2) attached to a wrist of the robot (1);
a movement command means (36) for generating a command of moving the robot (1) by the designated speed contained in the program in the designated direction contained in the program without activating the designated speed adjusting means in the case where the movement stopping command is decoded by the decoding means (38);
a force calculation means (31) for calculating a change in a force detection value from a reference value as a present force value when a force detection value of the force sensor (2) at the time of starting a movement of the robot (1) is used as the reference value; and
a comparison means (32) for comparing the present force value, which is repeatedly calculated at a predetermined period by the force calculation means (31), with a predetermined designated force value while the robot (1) is moving, wherein
when the comparison means (32) judges that the present force value is not less than the designated force value, the movement command means (36) stops the robot (1),
the robot control unit (10) further comprising a stopping position reading means (33) for reading a stopping position of the robot (1).

2. A robot control unit according to claim 1, further comprising a changeover means (34) for changing over whether the latest force detection value of the force sensor (2) at the time of starting of a movement of the robot (1) is employed as the reference value or the reference value, which was set before, is continuously used without being changed.

3. A robot control unit according to claim 1 or 2, wherein when an amount of movement of the robot (1) reaches an amount of the predetermined limitation of movement without an increase in the present force value to a value not less than the designated force value, the robot (1) is stopped and a predetermined processing with respect to the amount of movement of the robot (1) is carried out.

4. A robot control unit having a designated speed adjusting means (23) for adjusting a designated speed, which is contained in a robot command program, to a value not more than the designated speed, comprising:
a decoding means (38) for decoding a movement command having a force limitation of stopping a movement of the robot (1) according to a force detection value detected by a force sensor (2) attached to a wrist of the robot (1);
a movement command means (36) for generating a command of moving the robot (1) by the designated speed contained in the program to a designated position contained in the program in the case of decoding a movement command having the force limitation by the decoding means (38) without activating the designated speed adjusting means (23);
a force calculation means (31) for calculating a change in a force detection value from a reference value as a present force value when a force detection value of the force sensor (2) at the time of starting a movement of the robot (1) is used as the reference value; and
a comparison means (32) for comparing the present force value, which is repeatedly calculated at a predetermined period by the force calculation means (31), with a predetermined designated force value while the robot (1) is moving, wherein
when the comparison means (32) judges that the present force value is not less than the designated force value, the movement command means (36) stops the robot (1) and a predetermined processing is executed for the robot (1), and
when the robot (1) reaches the designated position while the present force value is being maintained at a value not more than the designated force value, the movement command means (36) stops the robot (1) and the original processing of the robot (1) in the program is continued.

5. A robot control unit according to claim 1 or 4, wherein when the robot (1) is stopped as a result of the judgment by the comparison means (32) that the present force value is not less than the designated force value, the robot (1) stopping position is compared with a predetermined allowable range and when the robot (1) stopping position is out of the predetermined allowable range, a predetermined processing with respect to the allowable range is executed.
